# EUROPÄISCHE PATENTSCHRIFT

(11) **EP 0 892 184 B1**
(45) Veröffentlichungstag und Bekanntmachung des Hinweises auf die Patenterteilung: **03.04.2002**
(21) Anmeldenummer: 98110436.7
(22) Anmeldetag: 06.06.1998
(51) Int. Cl.: F16C 11/06, F16M 11/14

(54) **Pendelauflage**
Pendulous support
Support oscillant

(30) Priorität: 30.06.1997 DE 29711375 U
(43) Veröffentlichungstag der Anmeldung: 20.01.1999
(73) Patentinhaber: Heinricht Kipp Werk, Spanntechnik + Normalelemente, 72172 Sulz (DE)
(72) Erfinder: Fischer, Reinhard, VDI, Dipl.-Ing. (FH), 72348 Rosenfeld (DE)
(74) Vertreter: KOHLER SCHMID + PARTNER

(56) Entgegenhaltungen:
- DE-U- 9 306 014
- DE-U- 9 415 907
- FR-A- 2 691 490
- GB-A- 1 455 656
- US-A- 5 073 417

## Beschreibung

Die Erfindung bezieht sich auf eine pendelnd gelagerte als Kugelpfannengelenk ausgebildete Auflagevorrichtung.

Derartige Pendelauflagen werden überall dort verwendet, wo eine statisch eindeutige Auflage eines Bauteils mit einer mehr oder weniger exakten oder veränderlichen Oberfläche erreicht werden muß. Bei einer bekannten Ausführungsform dieser Art sind zwischen der Pfanne und dem Kugelkörper des Gelenks in Ausnehmungen der Pfanne etwa parallel zur Gelenkachse verschiebbare und federbelastete Gleitstücke vorgesehen, welche am Kugelkörper anliegen. Im unbelasteten Zustand des eine Auflagefläche aufweisenden Kugelkörpers wird dieser von der Pfanne abgehoben, sodaß man den Kugelkörper und damit die Auflagefläche beliebig gegeneinander verschwenken kann. Im belasteten Zustand werden dagegen die Gleitstücke in die Ausnehmungen hineinbewegt. Es ergibt sich dann eine reibschlüssige Verriegelung zwischen den beiden Teilen.

Die GB-A-1 455 656 entspricht der Oberbegriff des Anspruches 1.

Die Aufgabe der vorliegenden Erfindung ist es, ausgehend von der gattungsgemäßer Art, eine Pendelauflage zu schaffen, bei welcher sich die Auflagefläche im unbelasteten Zustand selbsttätig in eine Grundstellung zurückstellt. Dies wird erfindungsgemäß durch die Merkmale der Kennzeichnungsteils des Anspruchs 1. Bei einer Schräglage der Teile gegeneinander wird im unbelasteten Zustand der Auflagevorrichtung die Feder des Gleitstückes, welches auf dem kleineren Radius anliegt, das Gleitstück in eine Lage verschieben, in welcher die Federkräfte beider Gleitstücke ausgeglichen sind, d.h. in eine zentrale Position als Ausgangslage.

Vorzugsweise sind die Gleitstücke an ihren anliegenden Enden kugelförmig ausgebildet. Dadurch wird die Reibung auf ein Mindestmaß verringert. Bei Auflagevorrichtungen, welche in alle Richtungen schwenkbar sein sollen, sind zweckmäßig vier oder mehr Gleitstücke etwa in Sternform vorgesehen. Um die Auflagevorrichtung möglichst klein zu halten, ist es wesentlich, daß an den aneinanderliegenden Flächen von Pfanne und Kugelkörper im Belastungsbereich möglichst kein unnötiger oder anderweitig genutzter Hohlraum angeordnet ist. Aus diesem Grunde sind die Gleitstücke im belastungsarmen oder -freien Bereich zwischen den Teilen angeordnet.

Es ist zweckmäßig, den Schwenkwinkel der Teile gegeneinander zu begrenzen, um ein ungewolltes Lösen derselben voneinander zu verhindern. Hierzu ist ein die Schwenkbewegung der Gelenkteile gegeneinander begrenzender Anschlag vorgesehen.

Nach einem weiteren Merkmal der Erfindung ist die Pfanne mit einer Auflagefläche versehen und weist für den Kugelkörper eine sich insbesondere über 180° erstreckende hohlkugelförmige Ausnehmung mit an beiden Enden sich verjüngendem Radius auf. Der Kugelkörper kann als Block geformt und an seinem in die Pfanne gerichteten Ende als Kugelteil gestaltet sein. Vorzugsweise erstreckt sich der Kugelteil des Kugelkörpers zur Bildung eines freien Raumes zwischen den Teilen über einen geringeren Winkel als die hohlkugelförmige Ausnehmung der Pfanne und sind die Gleitstücke außerhalb des Kugelteiles des Kugelkörpers in diesem gelagert. Am Kugelkörper ist vorzugsweise an dem seinem Kugelteil entgegengesetzten Ende eine Bohrung insbesondere eine Gewindebohrung vorgesehen, in welche beispielsweise ein Bolzen eingeschraubt werden kann, der seinerseits zur Befestigung der Auflagevorrichtung zwischen zwei Greifbacken dienen kann.

Die Zeichnung zeigt ein Ausführungsbeispiel der Erfindung. Es stellen dar:

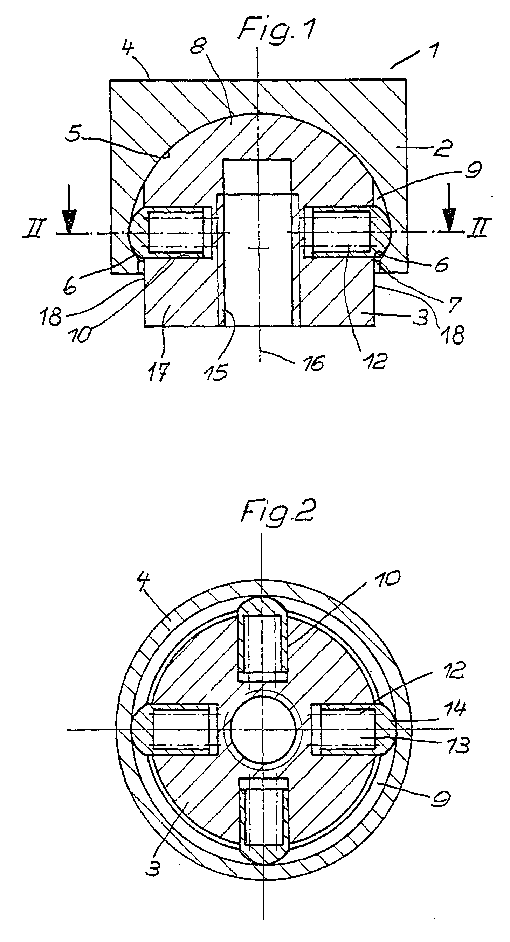

Figur 1 einen Querschnitt durch eine Auflagevorrichtung,
Figur 2 den Schnitt II-II nach Figur 1.

Die Auflagevorrichtung 1 besteht aus einer Pfanne 2 und einem Kugelkörper 3. Die Pfanne 2 ist an ihrem dem Kugelkörper 3 entgegengesetzten Ende mit einer Auflagefläche 4 versehen. Sie weist außerdem für den Kugelkörper 3 eine hohlkugelförmige Ausnehmung 5 auf, wobei sich an den beiden Enden bei 6 der Radius 7 verringert.

Der Kugelkörper 3 ist blockförmig ausgebildet und an seinem in die Ausnehmung 5 der Pfanne 2 eingreifenden Ende als Kugelteil 8 ausgebildet. Dabei erstreckt sich der Kugelteil 8 über einen geringeren Winkelbereich als die Ausnehmung 5, sodaß sich ein freier Zwischenraum 9 ergibt. Im Kugelkörper 3 sind in quer zur Gelenkachse 16 verlaufenden Bohrungen 10, welche in Sternform angeordnet sind, durch Federn 12 belastete Gleitstücke 13 vorgesehen. Die Gleitstücke 13 sind an ihren in der Ausnehmung 5 der Pfanne 2 anliegenden Enden 14 kugelförmig gestaltet, sodaß sich gegenüber der Ausnehmung 5 eine geringere Reibung ergibt. Der Kugelkörper 3 weist noch eine Gewindebohrung 15 auf, welche zum Einsetzen eines nicht dargestellten Gewindebolzens dienen kann.

Die Pfanne 2 kann gegenüber dem Kugelkörper 3 um einen gewissen Winkelbereich geschwenkt werden, bis eine der Seitenkanten 18 des blockförmigen Teiles 17 des Kugelkörpers 3 am unteren Teil der Pfanne 2 anliegt. Wenn die Pfanne 2 mit der Auflagefläche 4 unter Last schräg zur Gelenkachse liegt, sind die Federn 12 der einen Gleitstücke 13 entlastet, während die anderen Federn durch den verkleinerten Radius 7 gespannt sind. Bei Entlastung gleiten die Geitstücke 13 mit den gespannten Federn dann soweit an der Fläche der Ausnehmung 5 entlang, bis die Federkräfte ausgeglichen sind und die Pfanne mit der Auflagefläche wieder senkrecht zur Gelenkachse 16 also in der zentralen Ausgangsposition liegt.

## Patentansprüche

1. Pendelnd gelagerte als Kugelpfannengelenk ausgebildete Auflagevorrichtung (1) mit zwischen der Pfanne (2) und dem Kugelkörper (3) des Gelenks an einem der beiden Teile (2,3) verschiebbar gelagerten und am anderen Teil federnd belastet anliegenden Gleitstücken (13), wobei mindestens zwei sich etwa gegenüberliegende Gleitstücke (13) etwa quer zur Gelenkachse (16) angeordnet sind, **dadurch gekennzeichnet, dass** die gleitstüche (13) in einem umlaufenden freien Raum (9) zwischen den Teilen am jeweils anderen Teil (5) anliegen,wobei das Teil, an den die Gleitstücke (13) anliegen, so in einen kleineren Radius (7) übergeht, dass bei einer Schräglage der Teile zueinander die Feder eines der Gleitstücke (13) zusätzlich belastet wird.

2. Auflagevorrichtung nach Anspruch 1, **dadurch gekennzeichnet, daß** die Gleitstücke (13) an ihren anliegenden Enden (14) kugelförmig ausgebildet sind.

3. Auflagevorrichtung nach einem oder beiden der vorhergehenden Ansprüche, **dadurch gekennzeichnet, daß** vier oder mehr Gleitstücke (13) insbesondere in Sternform vorgesehen sind.

4. Auflagevorrichtung nach einem der vorhergehenden Ansprüche, **dadurch gekennzeichnet, daß** die Gleitstücke (13) im belastungsarmen oder -freien Bereich (9) zwischen den Teilen (2,3) angeordnet sind.

5. Auflagevorrichtung nach einem oder mehreren der vorhergehenden Ansprüche, **gekennzeichnet durch** mindestens einen die Schwenkbewegung der Gelenkteile (2,3) gegeneinander begrenzenden Anschlag (18).

6. Auflagevorrichtung nach einem der vorhergehenden Ansprüche, **dadurch gekennzeichnet, daß** die Pfanne (2) mit einer Auflagefläche (4) versehen ist und eine sich insbesondere über etwa 180° erstreckende hohlkugelförmige Ausnehmung (5) mit an beiden Enden sich verjüngendem Radius (7) für den Kugelkörper (3) und die Gleitstücke (13) aufweisen.

7. Auflagevorrichtung nach einem oder mehreren der vorhergehenden Ansprüche, **dadurch gekennzeichnet, daß** der Kugelkörper (3) als Block geformt und an seinem in die Pfanne (2) gerichteten Ende als Kugelabschnitt (8) ausgebildet ist.

8. Auflagevorrichtung nach Anspruch 7, **dadurch gekennzeichnet, daß** sich der Kugelabschnitt (8) des Kugelkörpers (3) zur Bildung des freien Raumes (9) zwischen den Teilen (2,3) über einen geringeren Winkel als die hohlkugelförmige Ausnehmung (5) der Kugelpfanne erstreckt und die Gleitstücke (13) außerhalb des Kugelteiles (8) des Kugelkörpers (3) in diesem gelagert sind.

9. Auflagevorrichtung nach einem oder beiden der vorhergehenden Ansprüche 7 bis 8, **dadurch gekennzeichnet, daß** der Kugelkörper (3) an dem seinem Kugelabschnitt (8) entgegengesetzten Ende mit einer Bohrung (15) insbesondere einer Gewindebohrung versehen ist.

## Claims

1. A self-aligning supporting device (1) constructed in the form of a ball-and-socket joint and having, between the socket (2) and the ball body (3) of the joint, sliding members (13) which are supported in a displaceable manner on one of the two parts (2, 3) and rest on the other part in a spring-loaded manner, wherein at least two sliding members (13) lying approximately opposite each other are arranged approximately perpendicular to the joint axis (16), **characterised in that** the sliding members (13) rest on the other part (5) in a free space (9) extending all the way round between the parts, wherein the part on which the sliding members (13) rest continues into a smaller radius (7) in such a manner that, when the parts are in an inclined position relative to each other, the spring of one of the sliding members (13) is additionally loaded.

2. A supporting device according to claim 1, **characterised in that** the sliding members (13) are of spherical construction at their resting ends (14).

3. A supporting device according to one or both of the preceding claims, **characterised in that** four or more sliding members (13) are provided especially in a star shape.

4. A supporting device according to any one of the preceding claims, **characterised in that** the sliding members (13) are arranged between the parts (2, 3) in the region (9) that is subject to little or no load.

5. A supporting device according to one or more of the preceding claims, **characterised by** at least one stop (18) that limits the pivoting movement of the joint parts (2, 3) relative to each other.

6. A supporting device according to any one of the preceding claims, **characterised in that** the socket (2) is provided with a supporting surface (4) and has a hollow spherical recess (5) extending especially over approximately 180° with a radius (7) that decreases at both ends for the ball body (3) and the sliding members (13).

7. A supporting device according to one or more of the preceding claims, **characterised in that** the ball body (3) is formed as a block and is constructed as a ball portion (8) at the end thereof pointing into the socket (2).

8. A supporting device according to claim 7, **characterised in that**, in order to form the free space (9) between the parts (2, 3), the ball portion (8) of the ball body (3) extends over a smaller angle than does the hollow spherical recess (5) of the ball socket, and the sliding members (13) are supported in the ball body (3) outside the ball part (8) thereof.

9. A supporting device according to one or both of the preceding claims 7 to 8, **characterised in that** the ball body (3) is provided with a bore (15), especially a threaded bore, at the end opposite its ball portion (8).

## Revendications

1. Support oscillant (1) réalisé en tant qu'articulation à coussinet sphérique, comprenant entre le coussinet (2) et le corps sphérique (3) de l'articulation, des pièces de glissement (13) montées de façon mobile sur l'une des deux parties (2, 3) et des pièces de glissement appliquées sur l'autre partie par un ressort, sachant qu'au moins deux pièces de glissement (13) à peu près situées l'une en face de l'autre sont disposées approximativement transversalement par rapport à l'axe d'articulation (16), **caractérisé en ce que** les pièces de glissement (13) sont chaque fois appliquées contre l'autre partie (2) dans un espace libre circulaire (9) situé entre les parties, sachant que la partie contre laquelle sont appliquées les pièces de glissement (13) voit son rayon (7) diminuer de telle sorte que, lorsque les pièces sont inclinées les unes par rapport aux autres, le ressort de l'une des pièces de glissement (13) est davantage sollicité.

2. Support selon la revendication 1, **caractérisé en ce que** les pièces de glissement (13) sont réalisées de façon sphérique à leurs extrémités d'appui (14).

3. Support selon l'une des revendications ou les deux revendications précédentes, **caractérisé en ce que** quatre pièces de glissement (13) ou plus sont prévues, notamment selon une disposition en étoile.

4. Support selon l'une des revendications précédentes, **caractérisé en ce que** les pièces de glissement (13) sont situées dans la zone (9) entre les parties (2, 3) qui est peu ou pas du tout sollicitée.

5. Support selon l'une ou plusieurs des revendications précédentes, **caractérisé par** au moins une butée (18) limitant le pivotement des parties (2, 3) de l'articulation l'une par rapport à l'autre.

6. Support selon l'une des revendications précédentes, **caractérisé en ce que** le coussinet (2) est muni d'une surface d'appui (4) et présente un évidement hémisphérique (5) s'étendant notamment sur environ 180° dont le rayon (7) se rétrécit aux deux extrémités et qui est destiné au corps sphérique (3) et aux pièces de glissement (13).

7. Support selon l'une ou plusieurs des revendications précédentes, **caractérisé en ce que** le corps sphérique (3) a la forme d'un bloc et est réalisé en tant que calotte sphérique (8) à son extrémité logée dans le coussinet (2).

8. Support selon la revendication 7, **caractérisé en ce que** la calotte sphérique (8) du corps sphérique (3) s'étend, pour former l'espace libre (9) entre les parties (2, 3), sur un angle plus petit que l'évidement hémisphérique (5) du coussinet, et **en ce qu'**en dehors de la calotte sphérique (8) du corps sphérique (3), les pièces de glissement (13) sont logées dans ledit espace libre.

9. Support selon l'une des deux dernières revendications ou les deux dernières revendications 7 et 8, **caractérisé en ce que** le corps sphérique (3) est muni à son extrémité opposée à la calotte sphérique (8) d'un perçage (15), notamment d'un taraudage.
